(19) Europäisches Patentamt / European Patent Office / Office européen des brevets

(11) **EP 3 570 676 B1**

(12) **EUROPEAN PATENT SPECIFICATION**

(45) Date of publication and mention
of the grant of the patent:
**23.11.2022 Bulletin 2022/47**

(51) International Patent Classification (IPC):
**A21D 2/36** *(2006.01)* **A21D 10/00** *(2006.01)*
**A21D 13/00** *(2017.01)* **A21D 4/00** *(2006.01)*

(21) Application number: **18705507.4**

(22) Date of filing: **18.01.2018**

(52) Cooperative Patent Classification (CPC):
(C-Sets available)
**A21D 10/002; A21D 2/36; A23V 2002/00** (Cont.)

(86) International application number:
**PCT/IT2018/050008**

(87) International publication number:
**WO 2018/134859 (26.07.2018 Gazette 2018/30)**

(54) **METHOD TO PRODUCE A BAKERY PRODUCT**

VERFAHREN ZUR HERSTELLUNG EINES BACKPRODUKTES

PROCÉDÉ DE PRODUCTION D'UN PRODUIT DE BOULANGERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.01.2017 IT 201700005243**

(43) Date of publication of application:
**27.11.2019 Bulletin 2019/48**

(73) Proprietor: **Atena S.r.l.**
**33048 San Giovanni Al Natisone (IT)**

(72) Inventor: **PESLE, Livio**
**33048 San Giovanni Al Natisone (IT)**

(74) Representative: **Petraz, Gilberto Luigi et al**
**GLP S.r.l.**
**Viale Europa Unita, 171**
**33100 Udine (IT)**

(56) References cited:
CN-A- 103 371 214    CN-A- 103 719 204
FR-A1- 2 588 159    JP-A- 2006 304 753
JP-A- 2008 081 425

• **NAVARRO MARTA ET AL: "Effect of hydroxytyrosol and olive leaf extract on 1,2-dicarbonyl compounds, hydroxymethylfurfural and advanced glycation endproducts in a biscuit model", FOOD CHEMISTRY, ELSEVIER LTD, NL, vol. 217, 7 September 2016 (2016-09-07), pages 602-609, XP029741763, ISSN: 0308-8146, DOI: 10.1016/J.FOODCHEM.2016.09.039**
• **A. BAIANO ET AL: "Physical and sensory properties of bread enriched with phenolic aqueous extracts from vegetable wastes", CZECH JOURNAL OF FOOD SCIENCE, vol. 33, no. No. 3, 7 June 2016 (2016-06-07), pages 247-253, XP055384367, CZ ISSN: 1212-1800, DOI: 10.17221/528/2014-CJFS**
• **WANG QIONG ET AL: "Tannins improve dough mixing properties through affecting physicochemical and structural properties of wheat gluten proteins", FOOD RESEARCH INTERNATIONAL, vol. 69, 20 December 2014 (2014-12-20), pages 64-71, XP029146363, ISSN: 0963-9969, DOI: 10.1016/J.FOODRES.2014.12.012**

(52) Cooperative Patent Classification (CPC): (Cont.)

C-Sets
A23V 2002/00, A23V 2200/02, A23V 2200/244,
A23V 2250/2131

**Description**

FIELD OF THE INVENTION

Embodiments described here concern a method to produce a bakery product applicable in the food industry and/or in the artisanal sector.

BACKGROUND OF THE INVENTION

It is known that bakery products are obtained by making a dough of flour with water that is kneaded, possibly divided into portions, possibly left to rise for leavening, and baked in the oven.
The flour can derive from the grinding of cereals, for example wheat/maize, rye, barley, oats, corn, sesame, rice, or other products, such as chestnuts, legumes, linseed, millet, quinoa, or tubers.
It is known that cereal flours contain proteins and that these proteins can be classified into four fractions according to their solubility: albumins, globulins, prolamins and glutelines.
In wheat, the prolamins and glutelines are identified with the specific names of, respectively, gliadins and glutenins. The fraction of glutenins is formed by a mixture of polymers with a high molecular weight which give elasticity to the dough. The larger polymers of glutenins are stabilized by inter-chain disulfide bonds. The gliadins have a globular structure with a low molecular weight and affect the viscosity of the dough.
The water normally supplies a certain amount of humidity to the dough, linking the protein content of the flour, in particular the insoluble gliadin and glutenin protein units, to form a viscoelastic protein complex, so-called gluten, which constitutes the bearing structure of the dough.
Therefore, the dough is a kind of lattice deriving from the amalgamation of flour and water that confers compactness, elasticity and the ability to retain the starches and gases that are generated during the possible subsequent leavening. These characteristics are functional to confer homogeneity and workability, so-called technological quality, to the dough for subsequent cooking.
It is therefore important to find the right proportion between the ingredients, that is, between flour and liquid substance, so that the dough can be worked to obtain the specific bakery product. In particular, the technological quality of a dough depends mainly on the type of flour, that is, the level of strength whether weak, medium, or strong.
The level of strength of the flour is directly correlated to the quantity of polymers of the gluten, or glutenins, with higher molecular weight, which contribute in the cross-linking of the dough to be obtained.
For example, flour is defined as "strong" when it has a lower ratio of gliadins/glutenins. On the contrary, a flour is defined as "weak" when it has a high ratio of gliadins/glutenins. These ratios are generally expressed as a function of viscoelastic parameters of the dough.
Therefore, the technological quality of a dough to be obtained also depends on the strength of the flour that is used which, as we have seen, is correlated to the presence of gluten.
However, we should add to the above that some subjects can be sensitive to the presence of gluten and, therefore, are less likely to consume bakery products prepared using a dough with a high gluten content.
It should also be noted that, in order for the final baking product to have certain characteristics, such as for example workability, it is sometimes necessary to use certain ingredients that do not bring any nutritional benefit, but are exclusively functional for increasing, for example, the duration of the final baking product, or for improving the cross-linking of the dough to be obtained.
This last aspect acquires greater importance if it is an organic bakery product where, in fact, the addition of artificial additives is not allowed.
Moreover, the quality of the flour, and in particular its strength, can be influenced by seasonal trends. In fact, it can happen that at one or more specific times of the year the flour shows less strength than expected and, consequently, a dough that uses one type of flour particularly for a particular class of bakery products, for example for bread, which would require the use of a strong flour, may not behave according to expectations, giving a final product of lower quality.
Document A. Baiano et al., "Physical and sensory properties of bread enriched with phenolic aqueous extracts from vegetable wastes", Czech J. Food Sci., Vol. 33, no. 3, 2015 describes the use of phenolic aqueous extracts from waste chicory, cabbage, celery, fennel, olive leaves and marc, obtained by means of microwave-assisted extraction, to replace the water of the dough to make bread.
Document FR-A-2.588.159 describes a bread for a diabetic diet, obtained from a dough that comprises flour, yeast, salt and infusion of meadowsweet, olive leaves, and Ariella leaves.
Document JP-A-2006304753 describes a powder of dried olive leaves obtained by first drying the leaves to a residual humidity content of from 4% to 10% and subsequently subjecting the dried leaves to grinding by means of a pulverizer. The powder of dried olive leaves is incorporated into a food product from 0.1% to 5% in weight.
Document JP-A-2008081425 describes a food product that includes olive leaves and an extract with a solvent of olive leaves to counteract the accumulation of visceral fat, for the treatment of metabolic syndrome and the prevention of arteriosclerosis.

Document Navarro Marta et al. "Effect of hydroxytyrosol and olive leaf extract on 1,2-dicarbonyl compounds, hydroxymethylfurfural, and advanced glycations end products in a biscuit model", Food Chemistry, vol. 217, 2017 describes a study of the anti-glycation activity of hydroxytyrosol and extract of olive leaves in wheat flour biscuits.

Documents CN-A-103371214 and CN-A-103719204 describe a formula for a biscuit that uses an extract of olive leaves.

Document Wang Qiong et al. "Tannins improve dough mixing properties through affecting physiochemical and structural properties of wheat gluten proteins", Food Research International, vol. 69, 2014 describes a study to evaluate the influence of the contribution of tannins in flours on the rheological properties of a dough.

There is therefore a need to perfect a method to produce a bakery product and a bakery product thus obtainable that can overcome at least one of the disadvantages of the state of the art.

In particular, one purpose of the present invention is to perfect a method to produce a bakery product which has similar technical properties to known food doughs and which at the same time shows an improvement in the characteristics of workability and nutritional and/or therapeutic and/or health characteristics, at the same time bringing important and additional nutritional benefits.

Another purpose of the present invention is to perfect a method to produce a bakery product that maintains the same characteristics of preservability using ingredients that have nutritional and/or therapeutic and/or health characteristics.

Another purpose of the present invention is to perfect a method to produce bakery products that are not subject to the seasonal nature of the quality of the flour.

Another purpose of the present invention is to perfect a method to improve the technological properties of a weak flour so that they are comparable with those of a strong flour.

The Applicant has devised, tested and embodied the present invention to overcome the shortcomings of the state of the art and to obtain these and other purposes and advantages.

SUMMARY OF THE INVENTION

The present invention is set forth and characterized in the independent claims, while the dependent claims describe other characteristics of the invention or variants to the main inventive idea.

In accordance with the above purposes, embodiments described here concern a method to produce a bakery product. In accordance with one embodiment, the method provides to make available a dough comprising at least flour and a liquid substance, comprising water, in the presence of a compound based on olive leaves, and to obtain from the dough a semi-worked product able to be subjected to baking so as to obtain the bakery product, wherein for the preparation of said dough, said compound based on olive leaves is used in the form of a liquid infusion, possibly concentrated, and the percentage ratio in weight between said liquid infusion and said liquid substance is from 10% to 50%, or for the preparation of said dough, said compound based on olive leaves is used in the form of a dry extract, obtained by freeze drying or atomization from said liquid infusion with a yield of dry residue comprised between 0.75% and 4%, said dry extract being added to the dough from 0.05% to 3% in weight with respect to the total quantity in weight of flour, wherein said liquid infusion is an aqueous extract composition of olive leaves obtained by extraction with hot water at a temperature, with reference to atmospheric pressure conditions, from 50°C to the boiling temperature of 100°C, and containing at least: - oleuropein (OE) from 100 mg/litre to 3,000 mg/litre; and - hydroxytyrosol (HT) from 70 mg/litre to 1,500 mg/litre.

In one embodiment, the semi-worked product obtained from the dough, or the dough itself, can be subjected directly to baking to obtain the desired bakery product.

In another embodiment, the dough and/or the semi-worked product can be subjected to a preservation treatment before being subjected to baking. In this case, the semi-worked product thus preserved can be subjected to baking later.

For example, by the term preservation treatment we mean, without this being a limitation to the field of protection, freezing, deep-freezing or sudden lowering of the temperature.

In another embodiment, the method provides to prepare the dough, kneading the flour with a liquid substance, with the compound based on olive leaves present.

In some embodiments, the compound based on olive leaves is supplied in the dough, either in dry form together with the flour, or in liquid form, comprised in the liquid substance used in the dough, or in a combination thereof.

In other embodiments, the compound based on olive leaves is supplied at a later phase after the flour and the liquid substance have been combined.

In yet another embodiment, the method provides to divide the dough into a plurality of portions and to give shape to the plurality of portions.

In variants of these embodiments it is possible to leave the dough, or the plurality of portions of the dough, to rest before baking.

In other variants of these embodiments, it is possible to make the dough, or the plurality of portions of the dough, rise before baking.

In accordance with some embodiments, the compound based on olive leaves can be chosen from a group comprising an infusion or aqueous decoction of olive leaves, an extract of the infusion in dry form or in aqueous solution, or a combination thereof.

In accordance with another embodiment, for the preparation of the dough, the compound based on olive leaves is used in the form of a liquid infusion, possibly concentrated, and the percentage ratio in weight/weight between the compound based on olive leaves in the form of a liquid infusion and the flour is from 10% to 40%, particularly from 10% to 35%, more particularly from 10% to 30%, and even more particularly from 12% to 28%, even more particularly from 15% to 25%.

In accordance with another embodiment, for the preparation of the dough, the compound based on olive leaves is used in the form of a dry extract obtained from the liquid infusion and added to the dough from 0.06% to 2% in weight with respect to the total quantity in weight of flour, in from 0.07% to 1.5% in weight.

In accordance with other embodiments, the flour can be chosen from a flour having a weak, medium or strong level of strength, depending on its protein unit content.

In accordance with another embodiment, the flour can be chosen from cereal flour, in particular, wheat, corn, rye, barley, oats, maize, spelt, rice or sesame, or flour not from cereals, in particular legumes, chestnuts, linseed, millet, quinoa, or tubers, or any mixture thereof.

In a possible variant, the dough can provide to add a leavening agent.

In accordance with another variant, the dough can provide to add salts, vegetable fats, animal fats, milk, or plants, such as raisins, figs, pumpkin, olives or a combination of these.

According to a possible variant embodiment, the compound based on olive leaves, when supplied in aqueous form, can constitute the only liquid substance used to obtain the dough.

Therefore, in accordance with the present description, the method to produce a bakery product according to embodiments described here provides to use at least one compound based on olive leaves in part or total substitution of the water commonly used as a liquid substance to obtain the dough.

The olive leaves have biological properties, useful, for example, in the treatment of hypertension, with antioxidant activity and as "radical scavengers", cardiovascular protective activity, mainly thanks to their antioxidant capacities, hypoglycemic and lipid-lowering activity, anti-inflammatory activity, analgesic activity, anti-microbe and antiviral activities, anti-tumor activity, sunlight-protecting and healing activities and activity on the cells of the bone tissue.

These biological and nutritional properties are obtained thanks to beneficial compounds, such as mainly oleuropein and hydroxytyrosol.

Advantageously, the compound based on olive leaves also has an accentuated hypoglycemic function.

The presence of the compound based on olive leaves determines a greater workability of the dough for its forming, since it makes it a homogeneous, elastic and compact dough using a weak flour.

This effect is advantageous to obtain a bakery product, for example bread, with a low gluten content, but with the same characteristics of workability as a dough obtained with strong flours.

Moreover, the presence of the compound based on olive leaves allows to combine flours with protein units with flours without protein units, in order to obtain a workable dough.

Moreover, the compound based on olive leaves allows to increase the duration of the bakery product, constituting an ingredient with functional, nutritional and/or therapeutic characteristics.

According to other embodiments, a method is provided to improve the technological properties of a flour for the production of a dough for a bakery product.

The method provides to add to the flour, directly in a dry form and/or liquid form together with the liquid substance used for the dough, a compound based on olive leaves, wherein said compound based on olive leaves is used in the form of a liquid infusion and the percentage ratio in weight between said liquid infusion and said liquid substance is from 10% to 50%, or said compound based on olive leaves is used in a dry extract form obtained, by freeze drying or atomization, from said liquid infusion with a yield of dry residue comprised between 0.75% and 4%, said dry extract being added to the dough from 0.05% and 3% in weight with respect to the total quantity in weight of flour, wherein said liquid infusion is an aqueous extract composition of olive leaves obtained by extraction with hot water at a temperature, with reference to atmospheric pressure conditions, from 50°C to the boiling temperature of 100°C, and containing at least: - oleuropein (OE) from 100 mg/ litre to 3,000 mg/litre; and - hydroxytyrosol (HT) from 70 mg/litre to 1,500 mg/litre.

Advantageously, the method allows to improve the technological properties of a weak flour so that, when used to prepare a bakery product typically made with strong flours, or to produce a bakery product typically made with medium and/or strong flours (for example pizzas and focaccias), it behaves like a strong flour even though it has the protein content and contribution typical of a weak flour.

In this way, the bakery product, for example everyday bread or a pizza base, is more digestible in spite of the fact that a weak flour has been used.

These and other aspects, characteristics and advantages of the present disclosure will be better understood with reference to the following description, drawings and attached claims. The drawings, which are integrated and form part of the present description, show some forms of embodiment of the present invention, and together with the description, are intended to describe the principles of the disclosure.

The various aspects and characteristics described in the present description can be applied individually where possible. These individual aspects, for example aspects and characteristics described in the attached dependent claims, can be the object of divisional applications.

It is understood that any aspect or characteristic that is discovered, during the patenting process, to be already known, shall not be claimed and shall be the object of a disclaimer.

BRIEF DESCRIPTION OF THE DRAWINGS

These and other characteristics of the present invention will become apparent from the following description of some embodiments, given as a non-restrictive example with reference to the attached drawings wherein:

- fig. 1 is a graph of a farinographic curve to calculate a stability index;
- fig. 2 is a graph of the farinographic curve of fig. 1 to calculate a softening index;
- fig. 3 is an example of a elongation test using a Texture Analyzer;
- fig. 4 is an example of a resistance curve (N) as a function of the elongation distance (mm) of a dough;
- figs. 5a - 5d are graphs of farinographic curves of a dough with type A flour respectively without IF, with IF at 15%, with IF at 25% and with IF at 100%;
- figs. 6a - 6c are graphs of farinographic curves of a dough with type B flour, respectively without IF, with IF at 15% and with IF at 25%;
- figs. 7a - 7d are graphs of farinographic curves of a dough with type C flour respectively without IF, with IF at 15%, with IF at 25% and with IF at 100%;
- figs. 8a - 8c are graphs of farinographic curves of a dough with type D flour, respectively without IF, with IF at 15% and with IF at 25%;
- fig. 9 is a graph of the maximum resistance (N) to elongation of doughs without IF, with IF at 15% and with IF at 25%;
- fig. 10 is a graph of peak extensibility (mm) to elongation of doughs without IF, with IF at 15% and with IF at 25%.

To facilitate comprehension, the same reference numbers have been used, where possible, to identify identical common elements in the drawings. It is understood that elements and characteristics of one embodiment can conveniently be incorporated into other embodiments without further clarifications.

DETAILED DESCRIPTION OF SOME EMBODIMENTS

We will now refer in detail to the various embodiments of the present invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

Unless otherwise defined, all the technical and scientific terms used here and hereafter have the same meaning as commonly understood by a person with ordinary experience in the field of the art to which the present invention belongs. Even if methods and materials similar or equivalent to those described here can be used in practice and in the trials of the present invention, the methods and materials are described hereafter as an example. In the event of conflict, the present application shall prevail, including its definitions. The materials, methods and examples have a purely illustrative purpose and shall not be understood restrictively.

All the measurements are made, unless otherwise indicated, at 25°C and at atmospheric pressure. All the temperatures are expressed, unless otherwise indicated, in Celsius scale.

All the intervals reported here shall be understood to include the extremes, including those that report an interval "between" two values, unless otherwise indicated.

The present description also includes the intervals that derive from uniting or overlapping two or more intervals described, unless otherwise indicated.

The present description also includes the intervals that can derive from the combination of two or more values taken at different points, unless otherwise indicated.

Terms such as "about", "generally", "substantially" shall be understood with their function of modifying a term or value that is not absolute, but is not reported in the state of the art. Such terms shall be defined by the specific circumstances and by the terms that they are intended to modify according to the common acceptance of such terms in the specific field. They shall take into account at least the degree of experimental error expected, the technical error and the instrumental error for a given technique adopted to measure a value.

In accordance with some embodiments, a method is provided to produce a bakery product which provides to make available a dough comprising at least flour and a liquid substance, comprising water, in the presence of a compound based on olive leaves from which to obtain a semi-worked product able to be cooked to obtain the bakery product, wherein said compound based on olive leaves is used in the form of a liquid infusion and the percentage ratio in weight between said liquid infusion and said liquid substance is from 10% to 50%, or said compound based on olive leaves is used in a dry extract form obtained, by freeze drying or atomization, from said liquid infusion with a yield of dry residue comprised between 0.75% and 4%, said dry extract being added to the dough from 0.05% and 3% in weight with respect to the total quantity in weight of flour, wherein said liquid infusion is an aqueous extract composition of olive leaves obtained by extraction with hot water at a temperature, with reference to atmospheric pressure conditions, from 50°C to the boiling temperature of 100°C, and containing at least: - oleuropein (OE) from 100 mg/litre to 3,000 mg/litre; and - hydroxytyrosol (HT) from 70 mg/litre to 1,500 mg/litre.

Advantageously, the compound based on olive leaves has, or shows, an antioxidant activity.

In addition, the compound based on olive leaves has, or shows, a hypoglycemic activity. In fact, in a person who eats a bakery product according to the present description, a reduced glycemic rate can be found compared with the consumption of a traditional bakery product, that is, without the compound based on olive leaves.

According to one embodiment, the dough or the semi-worked product obtained can be subjected to a preservation treatment, for example propaedeutic to its preservation, even prolonged, before use, that is, before it is subjected to cooking.

For example, the preservation treatment can consist of deep freezing, sudden temperature reduction, freezing, vacuum treatment, packaging in a protected or inert atmosphere or similar preservation techniques.

Consequently, embodiments described here concern both the "direct" production of bakery products, as described here, starting from the semi-worked product obtained from the dough, that is, subjecting the semi-worked product to cooking without preservation treatment, and also the preservation, for example, by using one of the above preservation techniques, before cooking, and then cooked as required by the manufacturer of the semi-worked product itself, or by a third party, if the manufacturer supplies the semi-worked product to third parties, for example large-scale retail trade or businesses in general (supermarkets, bakeries, pastry shops, restaurants and suchlike), or even by the final consumer, who can cook the semi-worked product for him/herself, for example in the home, in catering, canteens or other.

In other words, the embodiments described here can refer both to bakery products obtained as described above, and also to the industrial production of doughs and semi-worked products obtained from such doughs intended for subsequent preservation, to be stored and put in the oven for cooking at later times, for example doughs for bread, pizzas, croissants, brioches, puff pastry, cakes, etc.

For example, one field of application is that of the industrial production of bread, pizzas, piadinas, focaccias etc., to be sold in the large-scale retail trade whether they are frozen, or preserved by other methods, to be later cooked or heated.

According to some embodiments, the dough is obtained by mixing the flour with the liquid substance in the presence of the compound based on olive leaves.

Bakery product can be understood as a bakery product based on flour, cereals or not cereals, such as bread, bread substitutes, such as crackers, croutons, breadsticks, or desserts, sweet or savory pies, donuts, panettone, pandoro, unleavened bread, piadinas, tortillas, pizzas, focaccias biscuits, pastry products, croissants, brioches, puff pastry in general, or suchlike.

This includes bakery products that are fermented, or not fermented, or leavened with a chemical yeast (for example sodium bicarbonate). Among the fermented products, there are products fermented with yeasts, or from mixed fermentation. In the first case we find everyday bread (in turn subdivided between immediate fermentation and deferred fermentation), or pizzas, donuts, sweets, cakes, depending on the recipe formula. In the second case we find sourdough bread, or sweet products, such as panettone, pandoro, or others. Among the unfermented products there is unleavened bread, piadinas, tortillas or suchlike. Among the products leavened with chemical yeast there are cakes, sweet pies or savory pies.

According to one embodiment, the baking can take place at a temperature between 100°C and 300°C, in particular between 150°C and 280°C, for a time comprised between 5 and 70 minutes, in particular between 10 and 60 minutes, possibly also based on the size of the dough or each portion of dough.

For example, cooking can be performed in a chamber type, rotary, or tunnel type oven, and can be fed by wood, gas, or other fuel, or in an electric resistance oven.

For example, for a portion of large-sized dough, a lower temperature and a longer time can be used than for a small portion.

It is noted here that the flour used can be flour of any type of cereals, for example wheat, maize, rye, barley, oats, corn, spelt, rice, sesame, or non-cereal flour, in particular legumes, chestnuts, linseed, millet, quinoa, or tubers, or any mixture thereof.

The flour used can be of a type corresponding to a weak, medium, or strong level of strength.

It should be noted that the strength of the flour is determined by the presence of protein units insoluble in water and suitable to form a viscoelastic protein complex, defined as gluten, which determines the workability of a dough.

For example, the liquid substance comprising water makes it possible to bind, by means of a mechanical kneading action, the insoluble protein units, and/or the starch, contained in the flour.

According to one embodiment, the protein units comprise at least gliadin and glutenin and the strength of the flour is determined directly by a gliadin/glutenin ratio and indirectly by a bread making factor W.

The bread making factor W is obtained by calculating the area of a final path, determined by an alveograph, given by the resistance and elasticity of the dough.

By way of example only, a weak flour has a high gliadin/glutenin ratio and corresponds to a bread making factor W not exceeding 170; a medium strength flour has a balanced gliadin/glutenin ratio and corresponds to a bread making factor W comprised between 180 and 260; a strong flour has a low gliadin/glutenin ratio and corresponds to a bread making factor W comprised between 280 and 350.

According to one embodiment, the starting flour used for making the dough can have a native humidity of from 5% to 20%, in particular from 8% to 15.5%, more in particular from 10% to 14.5%. A typical native humidity content of the flour, in particular cereal flour, more particularly of common wheat, can be about 14%.

According to one embodiment, the method comprises:

    i) kneading flour with the liquid substance comprising water, in the presence of the compound based on olive leaves;
    ii) leaving the dough to rest;
    iii) possibly subdividing the dough into a plurality of portions and giving shape to the plurality of portions.

According to one embodiment, the method also provides to make the dough rise, or each portion of the dough if it has been divided.

Generally, cooking salt (sodium chloride) can also be used in the formula of the dough.

According to one embodiment, the dough can be stored at room temperature, or frozen, becoming a semi-worked product ready for subsequent baking in the oven.

The above steps can be carried out before proceeding to the cooking of the dough, or portions of dough, in the oven.

In a possible variant embodiment, leavening agents can be added to the dough.

In another variant embodiment, cooking salt, animal fats, vegetable fats, milk, milk proteins, egg, egg yolk, egg white, or plants, in particular vegetables, olives, or other food ingredients and/or food supplements or nutraceuticals or elements fortifying/beneficial for the organism, can be added to the dough.

According to a variant, the compound based on olive leaves can be selected from a group comprising an infusion or aqueous decoction of olive leaves, an extract of this infusion in a dry form or in aqueous solution, or a combination thereof. In possible implementations, the infusion or aqueous decoction in question, or the respective dry extract, is exclusively of olive leaves, that is, the use of other plants other than olive leaves is not envisaged.

According to some embodiments, the compound based on olive leaves can partly replace the liquid substance and the remaining part can consist, for example, of water, or any liquid substance, or a combination thereof.

According to one embodiment, for the preparation of the dough, the compound based on olive leaves is used in the form of a liquid infusion, possibly concentrated, for example from 15 to 30 times. In some embodiments, the percentage ratio in weight between the liquid infusion and the liquid substance can be from 10% to 40%, particularly from 10% to 35%, more particularly from 10% to 30%, even more particularly from 12% to 28%, still more particularly from 15% to 25%. In other words, in those embodiments in which the compound based on olive leaves is supplied in the form of a liquid infusion, possibly concentrated, for example from 15 to 30 times, it replaces a portion of the liquid substance normally used to make the dough according to the values indicated above.

According to some embodiments, the compound based on olive leaves can completely replace the liquid substance.

According to the invention, the compound based on olive leaves is a decoction or infusion of olive leaves (*Olea europaea L.*) comprising an aqueous composition containing at least:

    -    oleuropein (OE) from about 100 mg/litre to about 3,000 mg/litre;

- hydroxytyrosol (HT) from about 70 mg/litre to about 1,500 mg/ litre,

in which the decoction is an extract of the olive leaves obtained by extraction with hot water. By "hot water" it can be understood, with reference to atmospheric pressure conditions, a temperature from about 50°C to the boiling temperature of about 100°C, or from about 60°C to about 100°C, or from about 70°C to about 100°C. Examples can be 65°C, 70°C, 75°C, 80°C, 85°C, 90°C, 95°C, 100°C. The infusion time, that is, the time the olive leaves remain in the hot water, can be such as to obtain a desired final dry residue. At the end of the infusion, the olive leaves are removed and the liquid infusion is recovered. The liquid infusion can possibly be concentrated, for example from 15 to 30 times.

The compound based on olive leaves can be a dry extract, obtained by freeze-drying and/or atomization, obtained from the aqueous decoction or infusion of olive leaves (*Olea europaea L.*) as above. This dry extract, can be used as such in the dough, or it can be mixed or diluted with water and then used in this aqueous form in the dough.

For example, the concentrated compound in the form of dry extract can be mixed together with the flour, as an additional ingredient to the portion of powdered ingredients provided in the dough.

According to one embodiment, the compound based on olive leaves supplied as a dry extract can be present from 0.06% to 2% in weight with respect to the total amount in weight of flour, in particular from 0.07% to 1.5% in weight.

For example, the concentrated compound can have a concentrated yield (dry yield or dry residue yield) comprised between 1% and 4%, in particular between 1.1% and 2.5%, more particularly between 1.2% and 1.6%, even more particularly between 1.25% and 1.5%, expressed as a percentage ratio of grams of final concentrated compound (also called dry residue) on milliliters of volume of the starting decoction. Examples of concentrated yields can be: 1.25%, 1.30%, 1.35%, 1.40%, 1.43%, 1.45%. Other examples of concentrated yield can be: 2.50%, 3%, 3.5%, 4%.

According to one embodiment, the step of making the dough can take place by mechanical mixing with kneading machines, for example "dough hooks", or manually.

Typically, the optimum temperature of the dough when mixing is finished ranges from 20°C to 28°C and the duration of the kneading step can be 10-30 min.

The resting step, when included, allows a first leavening of the dough, to occur which can be covered by sheets of fabric.

According to another embodiment, the division, or breaking up, of the dough into a plurality of portions can take place by means of a divider machine.

Each portion of dough can be worked to take on a certain shape. In this case it is important that the dough has optimal workability characteristics that can be identified with the evaluation of a stability index, a softening index, a maximum resistance value and an extensibility value in correspondence with the maximum resistance value, which will be described hereafter in the description.

For example, the portions of the dough can assume a plurality of shapes according to requirements, such as a disc shape, round, irregular, oblong, filiform, squared, polygonal, or suchlike.

By forming, it is possible to obtain, for example, various types of formats of portions of dough that will be subsequently taken up by the final baking product. For example, the portion of the dough can take shape to make a piadina, a pizza, a crescentina, a tarallo, a frisella, carasau bread, a focaccia, a schiacciata, a loaf, a baguette, a breadstick, a bundle, a filled roll, or suchlike. Various other creative forms are also possible.

During the leavening the forms of dough can double or triple in volume, thanks to the fact that chemical reactions occur which, starting from the sugars, produce alcohol and carbon dioxide which is retained by the gluten.

For example, the leavening of the dough can last from 30 min to 90 min.

According to one embodiment, leavening can be performed in leavening cells which allow to regulate and control the temperature and humidity of the air.

According to another embodiment, leavening can take place at room temperature and the duration can vary according to the temperature and humidity present.

EXPERIMENTAL DATA

The Applicant has carried out experimental tests to determine the quality of the dough for a bakery product prepared using a compound of olive leaves in accordance with the present description.

In particular, the experimental tests have evaluated the effect of the compound of olive leaves on rheological and bread making properties of doughs made with flour with different strengths.

Materials

Four common wheat flours of different strength (A, B, C and D) were used, in which flour A is weak, flour B and flour C have a medium strength and flour D is strong.

An example of a bakery product is given below, in particular to make bread using a compound based on olive leaves in powder form (table 1):

Table 1

| Ingredients | Percentage on quantity of weak or medium flour (100 g) (%) | | |
|---|---|---|---|
| | Flour A | Flour B | Flour C |
| Compound based on powdered olive leaves | 0.0744 | 0.0761 | 0.0755 |
| Water | 55 | 55 | 55 |
| Yeast | 5 | 5 | 5 |
| Salt | 1 | 1 | 1 |

Furthermore, the compound based on olive leaves was used in the form of an infusion of olive leaves in liquid form, hereafter defined by the abbreviation IF, and obtained with 1% of dry residual substance.

For each flour A, B, C and D three types of dough were produced:

- a sample of reference dough based solely on flour (R) and water, as a liquid substance;
- a sample of dough with added IF. The IF was used by replacing about 15% of the water used to prepare the dough;
- a sample of dough with added IF. The IF was used by replacing about 25% of the water used to prepare the dough.

The following is an example of the production of a bakery product, in particular for the production of bread using the infusion based on olive leaves, replacing 15% and 25% of the liquid substance (table 2). For example, the infusion based on olive leaves can be obtained by using the percentage of powdered olive leaves from Table 1 and by diluting this powder with a liquid substance:

Table 2

| Ingredients | Percentage on the quantity of weak or medium flour (100 g) (%) | |
|---|---|---|
| | IF at 15% | IF at 25% |
| Infusion based on olive leaves | 8.25 | 13.75 |
| Water | 46.75 | 41.25 |
| Yeast | 5 | 5 |
| Salt | 1 | 1 |

All the dry ingredients are mixed at 22-26 ° C until a homogeneous dough is obtained in a kneading machine. The water and the infusion based on olive leaves are added to the mixture at a temperature of 40°C and the whole is mixed for a few minutes. Then, the oil is added and stirring continues until a maximum of 20 min.

The dough is leavened immediately, or is left to rest for a few minutes and then broken into suitably formed portions of dough.

The portions formed are left to rise and then cooked.

The portions of dough are cooked at 180°C for 25 min.

Evaluation of the rheological properties of the doughs

It should be noted that the technological quality of gluten is mainly determined by evaluating the rheological properties of the doughs, that is, on the basis of farinographic indexes, such as the stability index and softening index, or drop-off, determined with reference to the official AACC method 54-21 "Farinograph Method for flour" (AACC, 2000). These indexes are linked to the gluten structure and for the operators in the sector these indexes clearly identify the flours that are used.

*Farinographic analysis*

Farinographic analysis was performed using a farinograph that allows to evaluate the kneading properties on the basis of changes in consistency of the dough, induced by the mechanical stresses of the kneading machine. The

profile of the farinographic curve depends on the quality of the gluten.

From the faringographic analysis we obtain a faringographic graph that describes the trend of the consistency of the dough expressed in UB (Brabender unit for a Brabender type farinograph), or expressed in UP (promylographic units for a Promylograph T6 farinograph, Max Egger, Austria), depending on the time.

From this graph the following parameters are obtained:

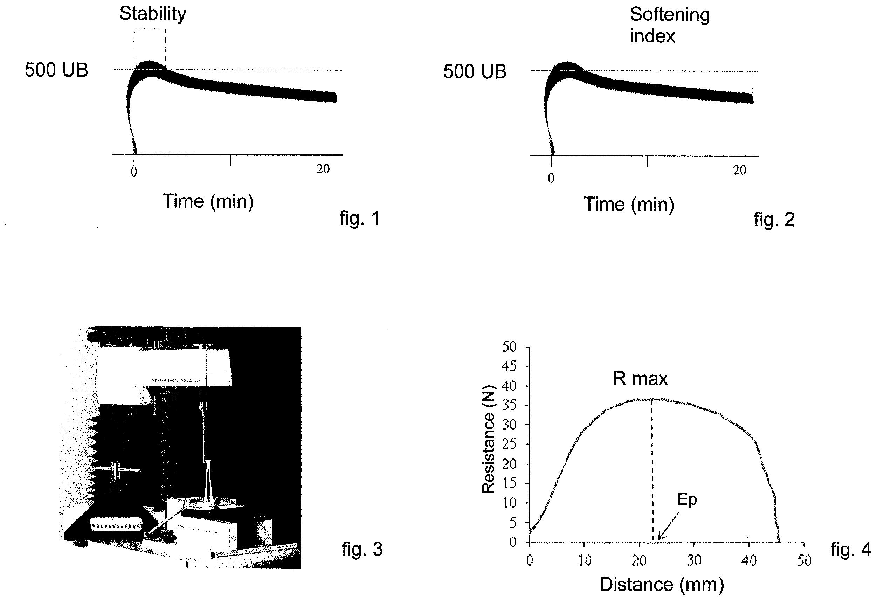

- stability (minutes): indicates the time during which the dough resists a mechanical action without changing its consistency. A strong flour is characterized by high stability. It is measured from the moment when the curve reaches the consistency of 500 UB, or UP at the moment when the consistency moves away from the value of 500 UB (fig. 1);
- softening index (drop-off) (expressed in UB or UP units): represents the loss of stability determined by the decrease in consistency of the dough. The softening index is given by the distance between the consistency of 500 UB and the center of the curve at 20 minutes of kneading (fig. 2). A strong flour is characterized by a low softening index;
- absorption: this is the quantity of water needed to reach the maximum consistency of 500 UB or UP, expressed on a meal with 14% humidity.

*Uniaxial elongation analysis*

The elongation properties of the dough were evaluated using a Texture Analyzer (TA.XT plus, Stable Micro Systems, UK) equipped with the Kieffer system and a 5 kg load cell. The sample of dough, containing 1% sodium chloride, prepared at the farinograph at development time, or kneading time, and having an absorption 6.5% lower than the optimal one, was subjected to uniaxial elongation until breaking (fig. 3).

From the recording of the trend of the strength as a function of the distance, the following parameters were obtained (fig. 4):

- the maximum resistance to elongation (Rmax, g): this is the force needed to break the dough. It is an index of elasticity of the dough. A strong flour (strong gluten) is characterized by high Rmax values;
- the extensibility in correspondence with Rmax (Ep, mm): this indicates the elongation of the dough before breaking, that is, in correspondence with the maximum resistance value at the elongation Rmax.

Results

The effect of adding the infusion based on olive leaves on the rheological properties of the dough was analyzed, in the experiment, using wheat flours with different strengths, and therefore different in the protein component. The characteristics of the gluten depend on the protein component, and the gluten can be more or less strong depending on the greater or lesser presence of covalent bonds and physical interactions between protein chains.

The rheological investigation was used as a means to identify possible changes in the structure of the gluten determined by the components of the infusion based on olive leaves.

Farinographic analysis

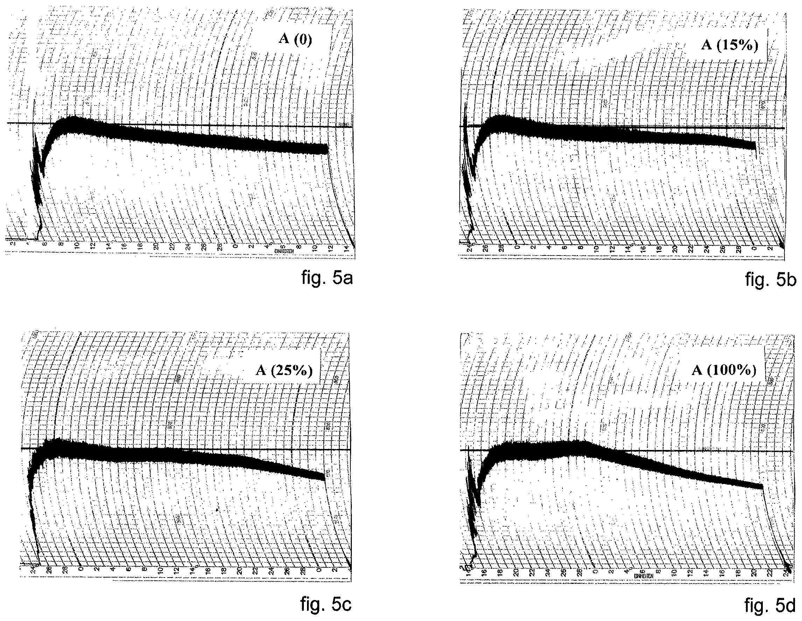

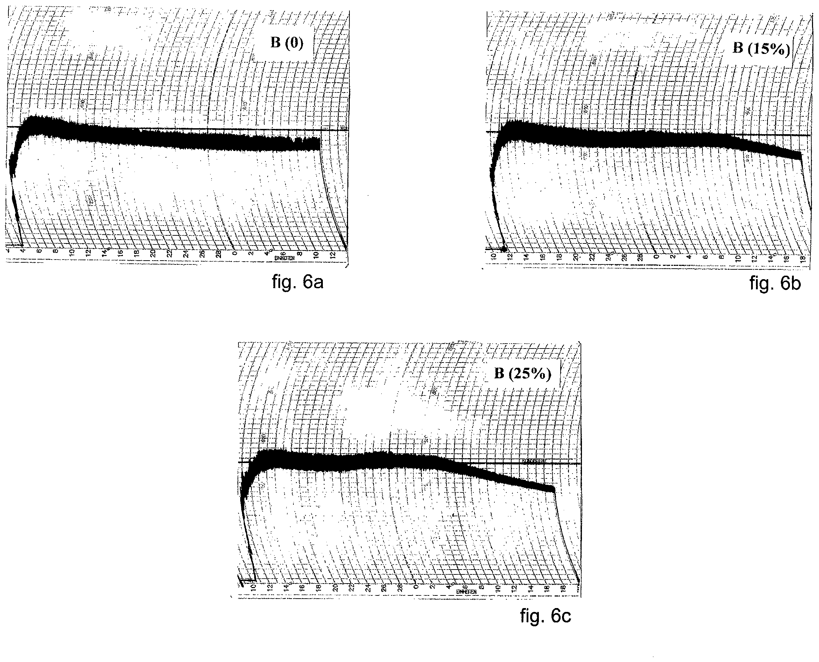

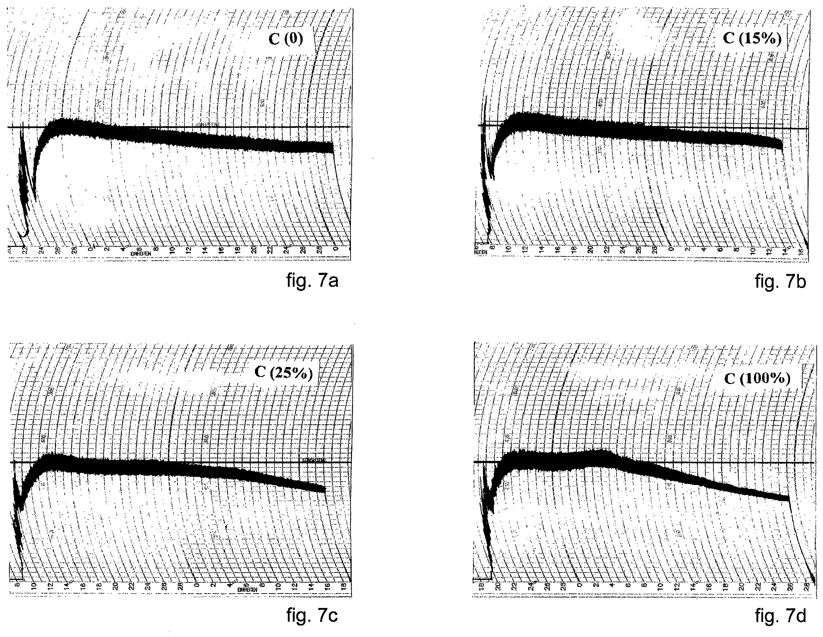

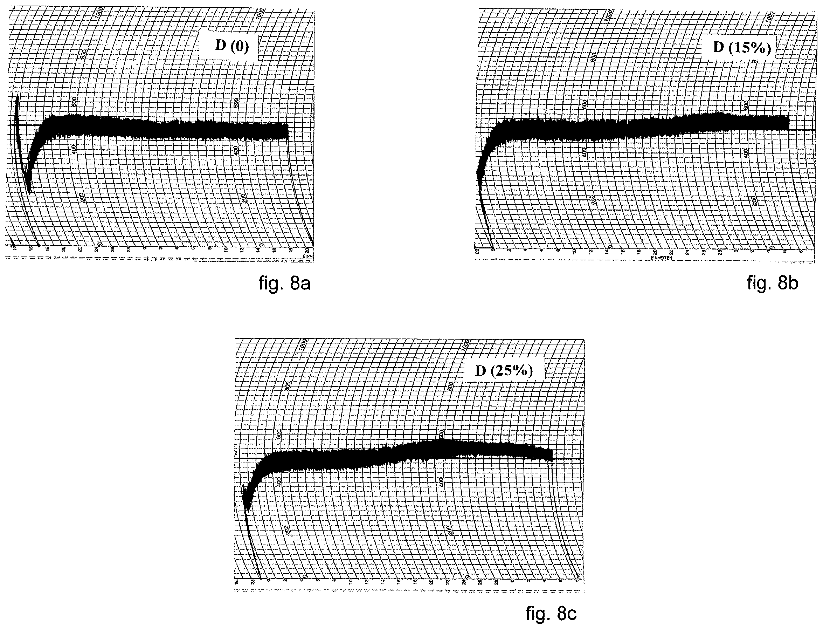

Figs. 5a-8c show the farinographic curves of the samples of dough made using type A, B, C and D flours with and without IF.

The farinographic analysis consists in measuring how the consistency of the dough changes during 20 minutes of kneading.

A weak flour is associated with a curve that tends to lower during kneading due to a break in the glutinic network. The differences in the behavior of the different flours were quantified by obtaining the stability index and the softening index (Table 3). The farinographic absorption index presented values comprised in the range from 54.9% to 59.4% in weight.

Table 3

| Type of flour | Infusion of olive leaves (%) | Absorption index (%)[1] | Stability index (min) | Softening index (UP)[2] |
|---|---|---|---|---|
| A | R | 54.9 | $3.6 \pm 0.1$ | $100 \pm 0$ |
| | IF 15% | 54.9 | $6.0 \pm 0.5$ | $110 \pm 14$ |
| | IF 25% | 54.9 | $8.8 \pm 0.2$ | $117 \pm 6$ |
| | IF 100% | 54.9 | $8.0 \pm 0$ | $150 \pm 0$ |

(continued)

| Type of flour | Infusion of olive leaves (%) | Absorption index (%)[1] | Stability index (min) | Softening index (UP)[2] |
|---|---|---|---|---|
| B | R | 56.2 | $4.8 \pm 0.5$ | $70 \pm 10$ |
| | IF 15% | 56.2 | $13.5 \pm 0.1$ | $80 \pm 0$ |
| | IF 25% | 56.2 | $12.0 \pm 0.3$ | $127 \pm 6$ |
| C | R | 55.7 | $5.0 \pm 0.1$ | $80 \pm 10$ |
| | IF 15% | 55.7 | $8.0 \pm 0.5$ | $90 \pm 0$ |
| | IF 25% | 55.7 | $8.5 \pm 0.7$ | $110 \pm 14$ |
| | IF 100% | 55.7 | $8.9 \pm 0$ | $160 \pm 14$ |
| D | R | 59.4 | $18.2 \pm 0$ | 0 |
| | IF 15% | 59.4 | $18.0 \pm 0.1$ | 0 |
| | IF 25% | 59.4 | $18.1 \pm 0.1$ | 0 |

[1] expressed on 100 g of flour with 14% humidity
[2] after 20 minutes kneading

The flours can be classified according to the following increasing order of strength:

A (weak) <B, C (medium strength) <D (strong).

With the exception of strong flour, the addition of infusion of olive leaves has led to changes in the farinographic profiles. The stability index is increased by 1.7 - 2.8 times adding the infusion based on olive leaves to the dough, indicating a reinforcing effect of the infusion based on olive leaves (Table 3).

The rheological properties of the dough can be modified by oxidizing or reducing agents, which acting on disulfide bridges (S-S) and sulfhydryl groups (-SH) of the protein units influence the degree of cross-linking of the gluten. As reducing agents, the compounds with antioxidant activity of the infusion based on olive leaves reduce the disulfide bridges to free thiol groups. This is a first cause of the improvement in the rheological properties, but not the main one.

Furthermore, we believe that there are other molecular interactions that make an important contribution to the aggregation and formation of gluten.

It could be hypothesized that the infusion based on olive leaves, promoting SH/SS interchange reactions, favors an increase in non-covalent interactions (hydrogen bridges and hydrophobic interactions) between proteins, and changes in the microstructure and aggregation of gluten, responsible for the improvement of the dough.

From the analysis of the farinographic profile at high kneading times, the softening index was obtained.

The softening index is linked to the loss of consistency of the dough under conditions of an excess of mechanical kneading energy (Table 3).

For the purpose of a purely experimental investigation, a prepared dough was analyzed by completely replacing the water with the infusion of olive leaves (type A and C flours with 100% IF). The infusion based on olive leaves led to an increase in the softening index compared to the reference with concentrations higher than 15%.

This experimental evidence suggests that there is a positive action of the infusion based on olive leaves on the strength of the dough up to a certain critical value of mechanical kneading energy.

Once the critical value of mechanical energy is exceeded, the gain in terms of strength is lost (15% of infusion) or even a greater weakening of the dough (25% and 100% of infusion) compared to the reference can be observed. The critical value of mechanical energy is reduced as the concentration increases. If the flour is strong, as in the case of sample D, the softening index is zero for all the samples and therefore no loss of strength was recorded under conditions of excess mechanical energy.

Table 4 summarizes the effect of increasing doses of infusion of olive leaves on the strength of the doughs, assessed on the basis of the stability index and the softening index. In the light of these results, the optimal percentage of infusion based on olive leaves in liquid form to increase the strength of the doughs is 15%.

Table 4

| Type of flour | Extract of olive leaves (%) | Stability index (min) | Softening index (UP) |
|---|---|---|---|
| A | R | weak | weak |
| | IF 15% | éé | |
| | IF 25% | éé | ê |
| | IF 100% | éé | êê |
| B | R | medium | medium |
| | IF 15% | ééé | |
| | IF 25% | ééé | êê |
| C | R | medium | medium |
| | IF 15% | é | |
| | IF 25% | é | ê |
| | IF 100% | éé | êê |
| D | R | strong | strong |
| | IF 15% | = | = |
| | IF 25% | = | = |
| (é): improvement; (ê): worsening; (=): no effect compared to the sample of dough without the infusion based on olive leaves. | | | |

Evaluation of the elongation properties of the dough

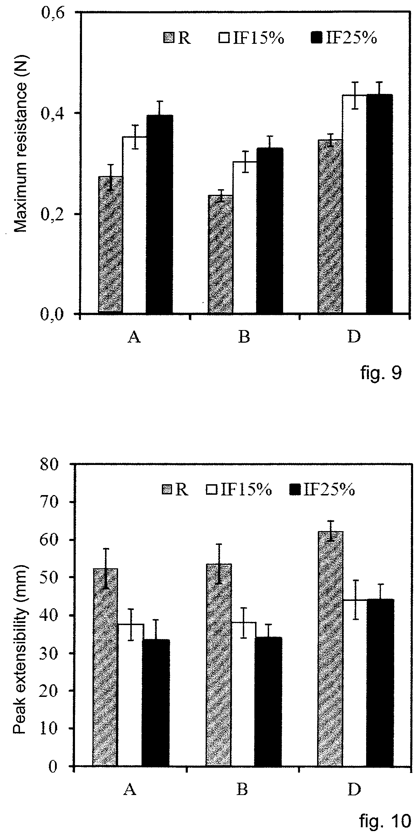

To confirm the reinforcing effect of the infusion based on olive leaves, the doughs prepared at the optimal development time, or optimal kneading time, were subjected to a uniaxial elongation test to determine the maximum resistance to elongation (Rmax) and extensibility (fig. 9).

According to the stability index, the doughs containing the infusion based on olive leaves showed a higher resistance to elongation, confirming the greater strength of gluten.

The increase in elongation was about 25-30% compared to the reference dough sample (R).

The extensibility underwent a 30% reduction in the presence of the infusion based on olive leaves.

The elongation properties were not significantly influenced by the concentration.

Conclusions

The experimental activity concerned the evaluation of the effect of the compound based on olive leaves, having antioxidant properties, on the technological quality of doughs obtained using flours having different strengths.

The changes in the kneading and elongation properties showed a reinforcing effect of the compound based on olive leaves on gluten, associable with an increase in stability during kneading, an increase in resistance to elongation and a reduction in extensibility.

In particular, a reinforcing effect is found of the compound based on olive leaves on flours having a stability index from 3.6 min to 5.0 min and having a softening index from 70 Brabender units to 100 Brabender units.

The compound based on olive leaves, promoting SH/S-S interchange reactions, probably favors changes in the microstructure and aggregation of gluten, responsible for the improvement of the dough.

The replacement of 15% infusion based on olive leaves with respect to the total liquid substance was identified as optimal, since higher doses of infusion based on olive leaves increased the susceptibility of the gluten to mechanical damage at high kneading times.

The above conclusions also support the fact that, according to embodiments described here, it is possible to improve the technological properties of a flour, in particular for example a weak flour, for the production of a dough for a bakery product, by adding to the flour, directly in dry form and/or in liquid form together with the liquid substance, comprising water, used for the dough, a compound based on olive leaves as described above.

Advantageously, this improvement can be useful to overcome the disadvantages connected to the oscillation of the quality of the flour with the season. This is all the more advantageous in the field of organic products, where it is not possible to use additives of non-organic origin.

Advantageously, moreover, a bakery product for which a strong flour would normally be required but which is made with a weak flour whose technological properties have improved in accordance with the present description can be better tolerated by persons sensitive to gluten.

**Claims**

1. Method to produce a bakery product, **characterized in that** it provides to make available a dough comprising at least flour and a liquid substance, comprising water, in the presence of a compound based on olive leaves, and to obtain from said dough a semi-worked product able to be subjected to baking so as to obtain said bakery product, wherein for the preparation of said dough, said compound based on olive leaves is used in the form of a liquid infusion, possibly concentrated, and the percentage ratio in weight between said liquid infusion and said liquid substance is from 10% to 50%,

   or for the preparation of said dough, said compound based on olive leaves is used in the form of a dry extract, obtained by freeze drying or atomization from said liquid infusion with a yield of dry residue comprised between 0.75% and 4%, said dry extract being added to the dough from 0.05% to 3% in weight with respect to the total quantity in weight of flour,
   wherein said liquid infusion is an aqueous extract composition of olive leaves obtained by extraction with hot water at a temperature, with reference to atmospheric pressure conditions, from 50°C to the boiling temperature of 100°C, and containing at least:

   - oleuropein (OE) from 100 mg/litre to 3,000 mg/litre; and
   - hydroxytyrosol (HT) from 70 mg/litre to 1,500 mg/litre.

2. Method as in claim 1, **characterized in that** said dough and/or said semi-worked product are subjected to a preservation treatment before being subjected to baking.

3. Method as in claim 1 or 2, **characterized in that** said compound based on olive leaves is supplied, in said dough, either in dry form together with the flour, or in liquid form, comprised in the liquid substance used in the dough, or in a combination thereof.

4. Method as in claim 1 or 2, **characterized in that** said compound based on olive leaves is supplied at a later phase after the flour and said liquid substance have been combined.

5. Method as in any claim from 1 to 4, **characterized in that** it provides to divide said dough into a plurality of portions and to give shape to the plurality of portions.

6. Method as in any claim from 1 to 5, **characterized in that** it provides to leave the dough, or said plurality of portions of said dough, to rest before baking.

7. Method as in any claim from 1 to 6, **characterized in that** it provides to make said dough, or said plurality of portions of said dough, rise before baking.

8. Method as in any claim from 1 to 7, **characterized in that** said compound based on olive leaves is chosen from a group comprising an infusion or aqueous decoction of olive leaves, an extract of said infusion in dry form or in aqueous solution, or a combination thereof.

9. Method as in any claim from 1 to 8, **characterized in that**, for the preparation of said dough, said compound based on olive leaves is used in the form of a liquid infusion and the percentage ratio in weight between said liquid infusion and said liquid substance is from 10% to 40%, in particular from 10% to 35%, more particularly from 10% to 30%, even more particularly from 12% to 28%, and even more particularly from 15% to 25%.

10. Method as in any claim from 1 to 9, **characterized in that** the compound based on olive leaves supplied in the form of a dry extract is from 0.06% to 2%, in particular from 0.07% to 1.5%, in weight with respect to the total quantity in weight of flour.

11. Method as in any claim from 1 to 10, **characterized in that** said flour can be chosen from a flour having a weak, medium or strong level of strength, depending on the protein content of said flour for working the dough.

12. Method as in any claim from 1 to 11, **characterized in that** said flour can be chosen from cereal flour, in particular, wheat, corn, rye, barley, oats, maize, spelt, rice or sesame, or flour not from cereals, in particular legumes, chestnuts, linseed, millet, quinoa, or tubers, or any mixture thereof.

13. Method as in any claim from 1 to 12, **characterized in that** baking takes place at a temperature between 100°C and 300°C, in particular between 150°C and 280°C, for a period of time between 5 and 70 minutes, in particular between 10 and 60 minutes.

14. Method to improve the technological properties of a flour for the production of a dough for a bakery product, **characterized in that** it provides to add to said flour, directly in dry form and/or in liquid form together with the liquid substance used for said dough, a compound based on olive leaves, wherein said compound based on olive leaves is used in the form of a liquid infusion and the percentage ratio in weight between said liquid infusion and said liquid substance is from 10% to 50%,

or said compound based on olive leaves is used in a dry extract form obtained, by freeze drying or atomization, from said liquid infusion with a yield of dry residue comprised between 0.75% and 4%, said dry extract being added to the dough from 0.05% and 3% in weight with respect to the total quantity in weight of flour, wherein said liquid infusion is an aqueous extract composition of olive leaves obtained by extraction with hot water at a temperature, with reference to atmospheric pressure conditions, from 50°C to the boiling temperature of 100°C, and containing at least:

- oleuropein (OE) from 100 mg/litre to 3,000 mg/litre; and
- hydroxytyrosol (HT) from 70 mg/litre to 1,500 mg/litre.

**Patentansprüche**

1. Verfahren zur Herstellung einer Backware, **dadurch gekennzeichnet, dass** es vorsieht, einen Teig bereitzustellen, der wenigstens Mehl und eine flüssige Substanz, die Wasser aufweist, aufweist, und zwar in der Anwesenheit eines Stoffs basierend auf Olivenblättern, und von dem Teig eine halbbearbeitete Ware zu erhalten, die einem Backen unterzogen werden kann, um die Backware zu erhalten, wobei für die Zubereitung des Teigs der Stoff basierend auf Olivenblättern in der Form eines flüssigen Aufguss, möglicherweise konzentriert, verwendet wird, und das prozentuale Gewichtsverhältnis zwischen dem flüssigen Aufguss und der flüssigen Substanz von 10% bis 50% ist,

oder für die Zubereitung des Teigs der Stoff basierend auf Olivenblättern in der Form eines Trockenextrakts verwendet wird, der durch Gefriertrocknung oder Zerstäubung von dem flüssigen Aufguss mit einem Ertrag von Trockenrückständen aufweisend zwischen 0,75 % und 4 % erhalten wird, wobei der Trockenextrakt dem Teig von 0,05 % bis 3 % an Gewicht, in Bezug auf die Gesamtmenge an Gewicht des Mehls, zugegeben wird, wobei der flüssige Aufguss eine wässrige Extraktzusammensetzung aus Olivenblättern ist, die durch Extraktion mit heißem Wasser bei einer Temperatur, in Bezug auf Atmosphärendruckbedingungen, von 50°C bis zu der Siedetemperatur von 100°C erhalten wird, und wenigstens folgendes enthält:

- Oleuropein (OE) von 100 mg/Liter bis 3.000 mg/Liter; und
- Hydroxytyrosol (HT) von 70 mg/Liter bis 1.500 mg/Liter.

2. Verfahren nach Anspruch 1, **dadurch gekennzeichnet, dass** der Teig und/oder die halbbearbeitete Ware einer Konservierungsbehandlung unterzogen wird, bevor sie einem Backen unterzogen wird.

3. Verfahren nach Anspruch 1 oder 2, **dadurch gekennzeichnet, dass** der Stoff basierend auf Olivenblättern dem Teig entweder in trockener Form zusammen mit dem Mehl, oder in flüssiger Form, die in der in dem Teig verwendeten flüssigen Substanz enthalten ist, oder in einer Kombination davon, zugeführt wird.

4. Verfahren nach Anspruch 1 oder 2, **dadurch gekennzeichnet, dass** der Stoff basierend auf Olivenblättern in einer späteren Phase, nachdem das Mehl und die flüssige Substanz kombiniert wurden, zugeführt wird.

5. Verfahren nach einem der Ansprüche 1 bis 4, **dadurch gekennzeichnet, dass** es vorsieht, den Teig in eine Vielzahl von Portionen zu teilen und der Vielzahl von Portionen eine Form zu geben.

**6.** Verfahren nach einem der Ansprüche 1 bis 5, **dadurch gekennzeichnet, dass** es vorsieht, den Teig oder die Vielzahl von Portionen des Teigs, vor dem Backen ruhen zu lassen.

**7.** Verfahren nach einem der Ansprüche 1 bis 6, **dadurch gekennzeichnet, dass** es vorsieht, den Teig oder die Vielzahl von Portionen des Teigs, vor dem Backen zum Aufgehen zu bringen.

**8.** Verfahren nach einem der Ansprüche 1 bis 7, **dadurch gekennzeichnet, dass** der Stoff basierend auf Olivenblättern aus einer Gruppe ausgewählt wird, die einen Aufguss oder einen wässrigen Sud von Olivenblättern, einen Extrakt des Aufgusses in trockener Form oder in wässriger Lösung, oder eine Kombination davon aufweist.

**9.** Verfahren nach einem der Ansprüche 1 bis 8, **dadurch gekennzeichnet, dass** für die Zubereitung des Teigs, der Stoff basierend auf Olivenblättern in der Form eines flüssigen Aufgusses verwendet wird, und das prozentuale Gewichtsverhältnis zwischen dem flüssigen Aufguss und der flüssigen Substanz von 10% bis 40%, insbesondere von 10% bis 35%, weiter insbesondere von 10% bis 30%, noch weiter insbesondere von 12% bis 28%, und noch weiter insbesondere von 15% bis 25% ist.

**10.** Verfahren nach einem der Ansprüche 1 bis 9, **dadurch gekennzeichnet, dass** der Stoff basierend auf Olivenblättern die in Form eines Trockenextrakts zugeführt wird, von 0,06% bis 2%, insbesondere von 0,07% bis 1,5%, an Gewicht in Bezug auf die Gesamtmenge an Gewicht des Mehls, ist.

**11.** Verfahren nach einem der Ansprüche 1 bis 10, **dadurch gekennzeichnet, dass** das Mehl aus einem Mehl mit einem schwachen, mittleren oder starken Härtegrad ausgewählt werden kann, und zwar abhängig von dem Proteingehalt des Mehls für die Verarbeitung des Teigs.

**12.** Verfahren nach einem der Ansprüche 1 bis 11, **dadurch gekennzeichnet, dass** das Mehl aus Getreidemehl, insbesondere aus Weizen, (Mais-)Korn, Roggen, Gerste, Hafer, Mais, Dinkel, Reis oder Sesam, oder Mehl nicht aus Getreide, insbesondere aus Hülsenfrüchten, Kastanien, Leinsamen, Hirse, Quinoa oder Knollen, oder aus einer Mischung davon ausgewählt werden kann.

**13.** Verfahren nach einem der Ansprüche 1 bis 12, **dadurch gekennzeichnet, dass** das Backen bei einer Temperatur zwischen 100°C und 300°C, insbesondere zwischen 150°C und 280°C, für eine Zeitspanne zwischen 5 und 70 Minuten, insbesondere zwischen 10 und 60 Minuten, erfolgt.

**14.** Verfahren zur Verbesserung der technologischen Eigenschaften eines Mehls für die Herstellung eines Teigs für eine Backware, **dadurch gekennzeichnet, dass** es vorsieht, dem Mehl, direkt in trockener Form und/oder in flüssiger Form zusammen mit der für den Teig verwendeten flüssigen Substanz, einen Stoff basierend auf Olivenblättern zuzugeben, wobei der Stoff basierend auf Olivenblättern in der Form eines flüssigen Aufgusses verwendet wird, und das prozentuale Gewichtsverhältnis zwischen dem flüssigen Aufguss und der flüssigen Substanz von 10% bis 50% ist,

oder der Stoff basierend auf Olivenblättern in einer Trockenextraktform verwendet wird, die durch Gefriertrocknung oder Zerstäubung, von dem flüssigen Aufguss mit einem Ertrag von Trockenrückständen aufweisend zwischen 0,75 % und 4 % erhalten wird, wobei der Trockenextrakt dem Teig von 0,05 % und 3 % an Gewicht, in Bezug auf die Gesamtmenge an Gewicht des Mehls, zugegeben wird.

wobei der flüssige Aufguss eine wässrige Extraktzusammensetzung aus Olivenblättern ist, die durch Extraktion mit heißem Wasser bei einer Temperatur, in Bezug auf Atmosphärendruckbedingungen, von 50°C bis zu der Siedetemperatur von 100°C erhalten wird, und wenigstens folgendes enthält:

- Oleuropein (OE) von 100 mg/Liter bis 3.000 mg/Liter; und
- Hydroxytyrosol (HT) von 70 mg/Liter bis 1.500 mg/Liter.

**Revendications**

**1.** Procédé de production d'un produit de boulangerie, **caractérisé en ce qu'**il prévoit de mettre à disposition une pâte comprenant au moins de la farine et une substance liquide, comprenant de l'eau, en présence d'un composé à base de feuilles d'olivier, et d'obtenir à partir de ladite pâte un produit semi-ouvré pouvant être soumis à une cuisson de manière à obtenir ledit produit de boulangerie, dans lequel pour la préparation de ladite pâte, ledit composé à base de feuilles d'olivier est utilisé sous la forme d'une infusion liquide, éventuellement concentrée, et le rapport en pourcentage en poids entre ladite infusion liquide et ladite substance liquide est de 10 % à 50 %, ou pour la préparation de ladite pâte, ledit composé à base de feuilles d'olivier est utilisé sous la forme d'un extrait sec, obtenu par lyophilisation ou atomisation à partir de ladite infusion liquide avec un rendement en résidu sec compris entre 0,75 % et 4 %, ledit extrait sec étant ajouté à la pâte de 0,05 % à 3 % en poids par rapport à la quantité totale en poids de farine,

dans lequel ladite infusion liquide est une composition d'extrait aqueux de feuilles d'olivier obtenue par extraction à l'eau chaude à une température, par référence aux conditions de pression atmosphérique, allant de 50°C à la température d'ébullition de 100°C, et comprenant au moins :

- de l'oleuropéine (OE) de 100 mg/litre à 3 000 mg/litre ; et
- de l'hydroxytyrosol (HT) de 70 mg/litre à 1 500 mg/litre.

2. Procédé selon la revendication 1, **caractérisé en ce que** ladite pâte et/ou ledit produit semi-ouvré sont soumis à un traitement de conservation avant d'être soumis à la cuisson.

3. Procédé selon la revendication 1 ou 2, **caractérisé en ce que** ledit composé à base de feuilles d'olivier est fourni, dans ladite pâte, soit sous forme sèche avec la farine, soit sous forme liquide, compris dans la substance liquide utilisée dans la pâte, ou dans une combinaison de celles-ci.

4. Procédé selon la revendication 1 ou 2, **caractérisé en ce que** ledit composé à base de feuilles d'olivier est fourni à une phase ultérieure après que la farine et ladite substance liquide ont été combinées.

5. Procédé selon l'une quelconque des revendications 1 à 4, **caractérisé en ce qu'**il prévoit de diviser ladite pâte en une pluralité de portions et de donner une forme à la pluralité de portions.

6. Procédé selon l'une quelconque des revendications 1 à 5, **caractérisé en ce qu'**il prévoit de laisser reposer la pâte, ou ladite pluralité de portions de ladite pâte, avant la cuisson.

7. Procédé selon l'une quelconque des revendications 1 à 6, **caractérisé en ce qu'**il prévoit de faire lever ladite pâte, ou ladite pluralité de portions de ladite pâte, avant la cuisson.

8. Procédé selon l'une quelconque des revendications 1 à 7, **caractérisé en ce que** ledit composé à base de feuilles d'olivier est choisi dans un groupe comprenant une infusion ou une décoction aqueuse de feuilles d'olivier, un extrait de ladite infusion sous forme sèche ou en solution aqueuse, ou une combinaison de ceux-ci.

9. Procédé selon l'une quelconque des revendications 1 à 8, **caractérisé en ce que,** pour la préparation de ladite pâte, ledit composé à base de feuilles d'olivier est utilisé sous forme d'une infusion liquide et le rapport en pourcentage en poids entre ladite infusion liquide et ladite substance liquide est de 10 % à 40 %, en particulier de 10 % à 35 %, plus particulièrement de 10 % à 30 %, encore plus particulièrement de 12 % à 28 %, et encore plus particulièrement de 15 % à 25 %.

10. Procédé selon l'une quelconque des revendications 1 à 9, **caractérisé en ce que** le composé à base de feuilles d'olivier fourni sous forme d'extrait sec vaut de 0,06 % à 2 %, notamment de 0,07 % à 1,5 %, en poids par rapport à la quantité totale en poids de farine.

11. Procédé selon l'une quelconque des revendications 1 à 10, **caractérisé en ce que** ladite farine peut être choisie parmi une farine ayant un niveau de force faible, moyen ou fort, en fonction de la teneur en protéines de ladite farine pour le travail de la pâte.

12. Procédé selon l'une quelconque des revendications 1 à 11, **caractérisé en ce que** ladite farine peut être choisie parmi des farines de céréales, en particulier de blé, maïs, seigle, orge, avoine, maïs, épeautre, riz ou sésame, ou des farines non céréalières, en particulier de légumineuses, châtaignes, graines de lin, millet, quinoa ou tubercules, ou tout mélange de celles-ci.

13. Procédé selon l'une quelconque des revendications 1 à 12, **caractérisé en ce que** la cuisson a lieu à une température comprise entre 100°C et 300°C, en particulier entre 150°C et 280°C, pendant une durée comprise entre 5 et 70 minutes, en particulier entre 10 et 60 minutes.

**14.** Procédé pour améliorer les propriétés technologiques d'une farine pour la production d'une pâte pour un produit de boulangerie, **caractérisé en ce qu'**il prévoit d'ajouter à ladite farine, directement sous forme sèche et/ou sous forme liquide avec la substance liquide utilisée pour ladite pâte, un composé à base de feuilles d'olivier, dans lequel ledit composé à base de feuilles d'olivier est utilisé sous la forme d'une infusion liquide et le rapport en pourcentage en poids entre ladite infusion liquide et ladite substance liquide est de 10 % à 50 %,

ou ledit composé à base de feuilles d'olivier est utilisé sous la forme d'un extrait sec obtenu, par lyophilisation ou atomisation, à partir de ladite infusion liquide avec un rendement en résidu sec compris entre 0,75 % et 4 %, ledit extrait sec étant ajouté à la pâte de 0,05 % à 3 % en poids par rapport à la quantité totale en poids de farine, dans lequel ladite infusion liquide est une composition d'extrait aqueux de feuilles d'olivier obtenue par extraction à l'eau chaude à une température, par référence aux conditions de pression atmosphérique, allant de 50°C à la température d'ébullition de 100°C, et comprenant au moins :

- de l'oleuropéine (OE) de 100 mg/litre à 3 000 mg/litre ; et
- de l'hydroxytyrosol (HT) de 70 mg/litre à 1 500 mg/litre.

fig. 1

fig. 2

fig. 3

fig. 4

fig. 5a

fig. 5b

fig. 5c

fig. 5d

fig. 6a

fig. 6b

fig. 6c

fig. 7b

C (15%)

fig. 7d

C (100%)

fig. 7a

C (0)

fig. 7c

C (25%)

fig. 8b

fig. 8c

fig. 8a

fig. 9

fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- FR 2588159 A
- JP 2006304753 A
- JP 2008081425 A
- CN 103371214 A
- CN 103719204 A

### Non-patent literature cited in the description

- **A. BAIANO et al.** Physical and sensory properties of bread enriched with phenolic aqueous extracts from vegetable wastes. *Czech J. Food Sci.,* 2015, vol. 33 (3
- **NAVARRO MARTA et al.** Effect of hydroxytyrosol and olive leaf extract on 1,2-dicarbonyl compounds, hydroxymethylfurfural, and advanced glycations end products in a biscuit model. *Food Chemistry,* 2017, vol. 217
- **WANG QIONG et al.** Tannins improve dough mixing properties through affecting physiochemical and structural properties of wheat gluten proteins. *Food Research International,* 2014, vol. 69